# EUROPEAN PATENT APPLICATION

(11) **EP 4 446 913 A1**
(43) Date of publication of application: **16.10.2024**
(21) Application number: 23167867.3
(22) Date of filing: 13.04.2023
(51) Int. Cl.: G06F 21/31, H04L 9/40

(54) **SYSTEM AND METHOD FOR ACTIVATION FLOW FOR ADMINISTRATION MANAGED FIDO AUTHENTICATORS**

(71) Applicant: THALES DIS FRANCE SAS, 92190 Meudon (FR); THALES DIS CPL CANADA, INC., Ottawa, ON K2M 7M6 (CA)
(72) Inventor: MUZAMIL, Muein, TEXAS, 78641 (US); BALAN, Dumitru, Chelsea (CA)
(74) Representative: Lotaut, Yacine Diaw

(57) **Abstract**

A method or system of activating an administrator managed Fast Identity Online (FIDO) authenticator can include requesting a provisioning of a FIDO authenticator in an enterprise system at an administrator level for use by an end user where the enterprise system includes a server. As part of the provisioning, the system can designate or mark the FIDO authenticator as pending activation by the end user, and restrict use of the FIDO authenticator until the end user follows an activation flow that includes confirmation of the end user identity and includes proof of possession of the FIDO authenticator. The system allows the administrator to deliver the FIDO authenticator or token that is designated or marked as awaiting activation. The end user can then activate the FIDO authenticator or token by proving their user identity and proving possession of the FIDO authenticator.

## Description

### CROSS-REFERENCE TO RELATED APPLICATIONS

Not applicable.

### TECHNICAL FIELD

The present disclosure generally relates to management of Fast Identity Online (FIDO) authenticators. More particularly, but not exclusively, the present disclosure relates to systems and methods of managing FIDO authenticators for end users in an enterprise environment.

### BACKGROUND

The FIDO ("Fast IDentity Online") Alliance is an open industry association that is trying to help reduce the over-reliance on passwords, addresses the lack of interoperability among devices that use strong authentication, and reduces the problems users face creating and remembering multiple usernames and passwords.

FIDO supports a full range of authentication technologies, including biometrics such as fingerprint and iris scanners, voice and facial recognition, as well as existing solutions and communications standards, such as Trusted Platform Modules (TPM), USB security tokens, embedded Secure Elements (eSE), smart cards, and near field communication (NFC). The specifications emphasize a device-centric model. Authentication over the wire happens using public-key cryptography. The user's device registers the user to a server by registering a public key. To authenticate the user, the device signs a challenge from the server using the private key that it holds. The keys on the device are unlocked by a local user gesture such as a biometric or pressing a button.

Currently, FIDO specifications only covers user-initiated enrollment that works very well for the end users who manage their own FIDO authenticators. But for enterprise use cases, administrators want an ability to manage FIDO authenticators on behalf for their workforce (similar to smart cards). Administrators want to provision FIDO authenticators in the system for the users and share them with the users as part of the onboarding process.

Unfortunately, allowing administrators to provision FIDO authenticators for other users in an enterprise system leaves a large gap in security in the event of a rogue administrator or in the event that a FIDO authenticator is compromised in the process of delivering the FIDO authenticator to the end user. Self-managed authentication by the end user is not a great option in an enterprise environment and nor is an unsecure administrator driven system.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a method of activating an administrator managed Fast Identity Online (FIDO) authenticator can include provisioning a FIDO authenticator in an enterprise system at an administrator level for use by an end user where the enterprise system includes one or more processors and memory coupled to the one or more processors and where an administrator is coupled to the end user via a computer network, marking the FIDO authenticator as pending activation by the end user, and restricting use of the FIDO authenticator until the end user follows an activation flow that includes confirmation of the end user identity and includes proof of possession of the FIDO authenticator.

In some embodiments, the administrator provisions the FIDO authenticator for the end user by importing a FIDO token and in some embodiments via an application programming interface (API). In some embodiments, the administrator calls an API gateway to import the FIDO token. Further, in some embodiments, the API gateway calls a FIDO server to import the FIDO token with the pending activation. In some embodiments, a User Interface can allow an administrator to import FIDO authenticators which can call the same API noted above behind the scenes. In some embodiments the API gateway is optional. In yet other embodiments, the API gateway is embedded as part of the FIDO server. In either case, the FIDO server or API gateway is exposing the APIs.

In some embodiments, the administrator shares the FIDO authenticator with the end user.

In some embodiments, the system end user activates the FIDO authenticator by confirming the end user's identification by using, for example, LDAP password or using Email verification. In yet other embodiments, verification can be done with SMS, OTP verification and government/company document verification such as passports, driver's license, company smart cards and the like.

In some embodiments, the system in response to detecting the end user attempting to authenticate the FIDO authenticator and detecting that the FIDO authenticator is in a pending activation state, initiates an activation flow requiring confirmation of an end user identity and confirmation of possession of the FIDO authenticator by requiring use of a FIDO token by the end user. In some embodiments, the system activates the FIDO token in a FIDO server in response to a successful FIDO authentication of the FIDO authenticator. In some embodiments, the system uses an activation service to redirect to an identity provider to continue authentication of the end user.

In some embodiments, a system of activating an administrator managed Fast Identity Online (FIDO) authenticator using an identity provider and activation service can include one or more processors and memory coupled to the one or more processors where the memory includes computer instructions which when executed by the one or more processors causes the one or more processors to perform certain operations. The operations can include receiving a request via a communication network to provision a FIDO authenticator in an enterprise system at an administrator level for use by an end user, marking the FIDO authenticator as pending activation by the end user, and restricting use of the FIDO authenticator until the end user follows an activation flow that includes confirmation of the end user identity and includes proof of possession of the FIDO authenticator.

In some embodiments, the administrator provisions the FIDO authenticator for the end user by importing a FIDO token via an application programming interface (API) and wherein the administrator calls an API gateway to import the FIDO token and the API gateway calls a FIDO server to import the FIDO token with the pending activation.

In some embodiments, the administrator shares the FIDO authenticator with the pending activation with the end user.

In some embodiments, the end user activates the FIDO authenticator by confirming the end user's identification by using an LDAP password or using Email verification.

In some embodiments, the system in response to detecting the end user attempting to authenticate the FIDO authenticator and detecting that the FIDO authenticator is in a pending activation state, initiates an activation flow requiring confirmation of an end user identity and confirmation of possession of the FIDO authenticator by requiring use of a FIDO token by the end user. In some embodiments, the system activates the FIDO token in a FIDO server in response to a successful FIDO authentication of the FIDO authenticator. In some embodiments, the system uses the activation service to redirect to the identity provider to continue authentication of the end user.

In some embodiments, a system of activating an administrator managed Fast Identity Online (FIDO) authenticator can include one or more processors and memory coupled to the one or more processors where the memory includes computer instructions which when executed by the one or more processors causes the one or more processors at one or more of an authentication server, an identity provider, a FIDO server, and an activation service associated with an enterprise to perform certain operations. The operations can include receiving a request at an administrator level via a communication network at the authentication server to provision a FIDO authenticator for use by an end user having an end user identity, designating the FIDO authenticator as pending activation until the FIDO activator is activated by the end user, and authenticating the FIDO authenticator only after an end user activation flow that includes receipt by the authentication server of confirmation of the end user identity and includes receipt by the authentication server of proof of possession of the FIDO authenticator by the end user.

In some embodiments, an administrator provisions the FIDO authenticator for the end user by importing a FIDO token via an application programming interface (API) to the authentication server and wherein the administrator calls an API gateway to import the FIDO token and the API gateway calls a FIDO server to import the FIDO token with the pending activation.

In some embodiments, the end user activates the FIDO authenticator by confirming the end user's identification by using an LDAP password or using Email verification.

In some embodiments, the system in response to detecting the end user attempting to authenticate the FIDO authenticator and detecting that the FIDO authenticator is in a pending activation state, initiates an activation flow requiring confirmation of the end user identity and confirmation of possession of the FIDO authenticator by requiring use of a FIDO token by the end user.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 illustrates a system of activating an administrator managed Fast Identity Online (FIDO) authenticator in accordance with the embodiments;
FIG. 2 illustrates another system of activating an administrator managed FIDO authenticator in accordance with the embodiments; and
FIG. 3 illustrates a flow chart of a method of activating an administrator managed FIDO authenticator accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

In general terms, some embodiments are configured to allow administrators to manage FIDO authenticators on behalf of their workforce (similar to smart cards) while still making the process foolproof from administrators or others that attempt to be bad actors. Administrators in an enterprise generally want to provision FIDO authenticators in a system for their users and share them with the users as part of the onboarding process.

The challenge encountered in this scenario is to ensure that only the end user that is being enrolled can use the authenticator. If a bad actor (such as a rogue administrator or other individual) obtains the authenticator, how can such a system ensure that the bad actor cannot login into the system by impersonating as the actual end user? The embodiments improve the security posture and identity proofing for managed FIDO tokens such as in the context of an enterprise by preventing the possibility of impersonation of a user. The system and flow ensures that only the intended user is authenticated

The embodiments herein address the security concerns related to the delivery process of administrator managed FIDO authenticators to the end users by allowing administrators to provision FIDO authenticators in the system, but by having the FIDO authenticators marked or designated as "pending activation". In this regard, the end users are unable to use the FIDO authenticators for authentications until they follow a particular activation flow. As part of the activation flow in some embodiments, the end users will need to confirm their user identity (by using some other factor such as LDAP password, OTP over email or SMS or by other means) and further provide the proof of FIDO authenticator possession.

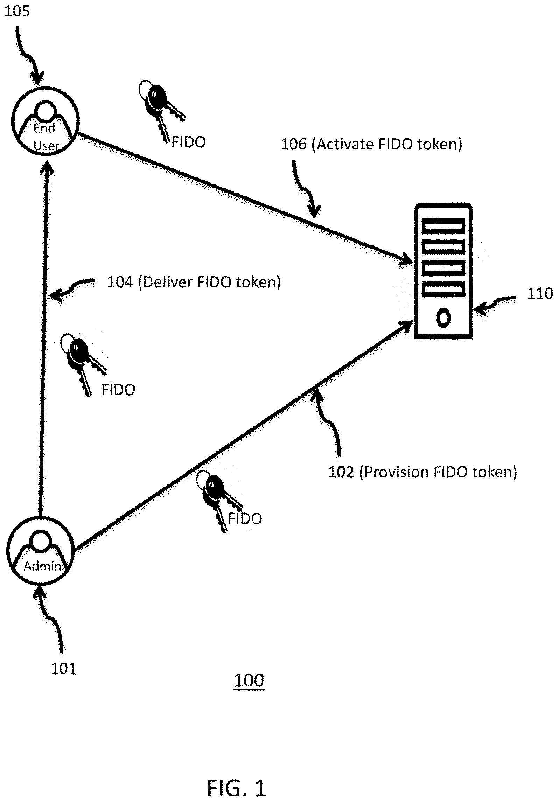

Referring to FIG. 1, a system 100 illustrates a simple FIDO authenticator activation flow for administrator managed FIDO authenticators where the activation flow proves the user identity and at the same time confirms authenticator procession to prevent user impersonation. The embodiments primarily apply to administrator-initiated FIDO authenticators, where enterprises are looking for password-less solution to end user authentication using the FIDO standards.

In some embodiments, the system 100 of activating an administrator managed Fast Identity Online (FIDO) authenticator can include requesting a provisioning at 102 of a FIDO authenticator in an enterprise system at an administrator level for use by an end user 105 (where the enterprise system includes a server 110 or one or more processors and memory coupled to the one or more processors and where an administrator 101 is coupled to the end user 105 via a computer network). As part of the provisioning, the system can designate or mark the FIDO authenticator as pending activation by the end user, and restrict use of the FIDO authenticator until the end user follows an activation flow that includes confirmation of the end user identity and includes proof of possession of the FIDO authenticator. The system 100 allows the administrator 101 to deliver at 104 the FIDO authenticator or token that is designated or marked as awaiting activation by the end user 105. The end user 105 can then activate the FIDO authenticator or token at 106 by proving their user identity and proving possession of the FIDO authenticator as noted above.

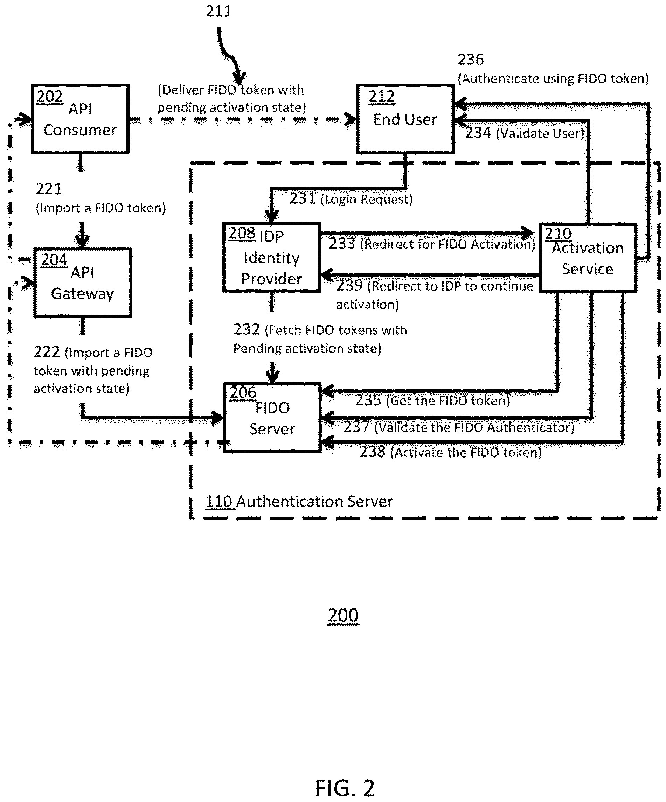

In some embodiments and with further reference to the system 200 of FIG. 2, an administrator or API consumer 202 provisions the FIDO authenticator for an end user 212 by importing a FIDO token 221 via an application programming interface (API). In some embodiments, the administrator or API Consumer 202 calls an API gateway 204 to import the FIDO token. Further, in some embodiments, the API gateway 204 calls a FIDO server 206 to import the FIDO token with the pending activation at 222.

In some embodiments, the administrator or API Consumer 202 shares the FIDO authenticator with the end user 212.

In some embodiments, the system end user 212 activates the FIDO authenticator by confirming the end user's identification at 234 by using multi-factor verification or authentication by using, for example, LDAP password or using Email verification or other means.

In some embodiments, the system in response to detecting the end user 212 attempting to authenticate the FIDO authenticator and detecting that the FIDO authenticator is in a pending activation state, initiates an activation flow requiring confirmation of an end user identity (234) and confirmation of possession of the FIDO authenticator by requiring use of a FIDO token by the end user at 236. In some embodiments, the system 200 activates the FIDO token in a FIDO server 206 in response to a successful FIDO authentication of the FIDO authenticator. In some embodiments, the system 200 uses an activation service 210 to redirect to an identity provider 208 to continue authentication of the end user 212.

In some embodiments, a system 200 of activating an administrator managed Fast Identity Online (FIDO) authenticator using an identity provider 208 and activation service 210 can include an authentication server 110 having computer instructions that execution certain functions or operations. The operations can include receiving a request at 222 via a communication network to provision a FIDO authenticator in an enterprise system at an administrator level for use by an end user 212, marking the FIDO authenticator as pending activation by the end user, and restricting use of the FIDO authenticator until the end user 212 follows an activation flow that includes confirmation of the end user identity at 234 and includes proof of possession of the FIDO authenticator at 236.

In some embodiments, the administrator 202 provisions the FIDO authenticator for the end user 212 by importing at 221 a FIDO token via an application programming interface (API) and wherein the administrator 202 calls an API gateway 204 to import the FIDO token and the API gateway 204 calls a FIDO server 206 to import the FIDO token with the pending activation.

In some embodiments, the administrator shares the FIDO authenticator with the pending activation with the end user at 211.

In some embodiments, the end user activates the FIDO authenticator by confirming the end user's identification by using an LDAP password or using Email verification at 234.

In some embodiments, the system 200 in response to detecting the end user attempting to authenticate the FIDO authenticator and detecting that the FIDO authenticator is in a pending activation state, initiates an activation flow requiring confirmation of an end user identity at 234 and confirmation of possession of the FIDO authenticator by requiring use of a FIDO token by the end user at 236. In some embodiments, the system 200 activates the FIDO token in a FIDO server 206 in response to a successful FIDO authentication of the FIDO authenticator. In some embodiments, the system 200 uses the activation service 210 to redirect to the identity provider to continue authentication of the end user. The activation service 210 also performs the functions of getting the FIDO token at 235, validates the FIDO authenticator in response to the end user 212 proving their user identity (at 236) and activates the FIDO authenticator or token at 238 in response to further proving possession of the FIDO authenticator or token.

In some embodiments with continued reference to FIGs. 1 and 2, a system 200 of activating an administrator managed FIDO authenticator can include one or more processors and memory coupled to the one or more processors where the memory includes computer instructions which when executed by the one or more processors causes the one or more processors at one or more of an authentication server 110, an identity provider 208, a FIDO server 206, and an activation service 210 associated with an enterprise to perform certain operations. In some embodiments, the authentication server can just include the identity provider 208 or the identity provider and activation service 210, or the identity provider 208, the activation service 210 and the FIDO server 206 or any other combination thereof. The operations can include receiving a request (221) at an administrator level via a communication network at the authentication server 110 to provision a FIDO authenticator for use by an end user 212 having an end user identity, designating the FIDO authenticator as pending activation until the FIDO activator is activated by the end user 212, and authenticating the FIDO authenticator only after an end user activation flow that includes receipt by the authentication server 110 of confirmation of the end user identity (234) and includes receipt by the authentication server 110 of proof of possession (238) of the FIDO authenticator by the end user.

In some embodiments, an administrator (202) provisions the FIDO authenticator for the end user 212 by importing a FIDO token via an application programming interface (API) to the authentication server and wherein the administrator 202 calls an API gateway 204 to import the FIDO token and the API gateway 204 calls a FIDO server 206 to import the FIDO token with the pending activation at 222.

In some embodiments, the end user 212 activates the FIDO authenticator by confirming the end user's identification at 234 by using an LDAP password or using Email verification.

In some embodiments, the system 200 in response to detecting the end user attempting to authenticate the FIDO authenticator and detecting that the FIDO authenticator is in a pending activation state, initiates an activation flow requiring confirmation of the end user identity at 234 and confirmation of possession at 236 of the FIDO authenticator by requiring use of a FIDO token by the end user.

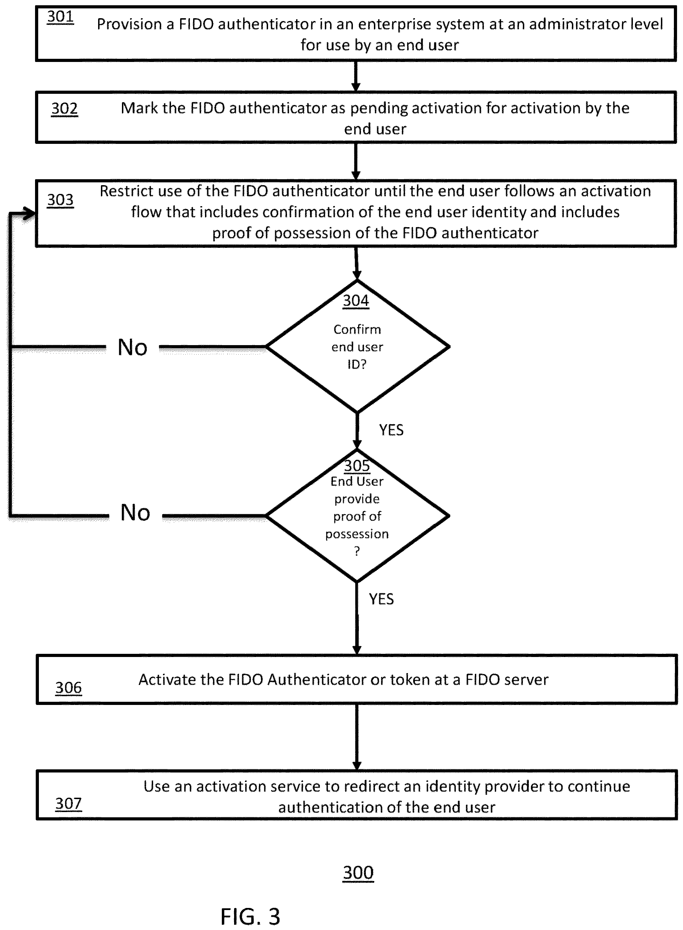

Referring to FIG. 3, a flow chart of a method 300 illustrates a simple FIDO authenticator activation flow for administrator managed FIDO authenticators where the activation flow proves the user identity and at the same time confirms authenticator procession to prevent user impersonation. Again, the embodiments primarily apply to administrator-initiated FIDO authenticators, where enterprises are looking for password-less solution to end user authentication using the FIDO standards.

In some embodiments, the method 300 can begin at 301 by provisioning a FIDO authenticator in an enterprise system at an administrator level for use by an end user at the request of an administrator. As part of the provisioning, the system can designate or mark the FIDO authenticator at 302 as pending activation by the end user, and further restrict use at 303 of the FIDO authenticator until the end user follows an activation flow that includes confirmation of the end user identity and includes proof of possession of the FIDO authenticator. Thus, at a decision block 304, if the end user identity cannot be identified, the method 300 continues to restrict use of the FIDO authenticator at 303. If the user identity is confirmed at decision block 304, then the method determines if the end user provides proof of possession of the FIDO Authenticator at decision block 305. If the end user cannot provide proof of possession at decision block 305, the method can return to continue restricting use of the FIDO Authenticator at 303. If the end user identification is confirmed at 304 and possession of the FIDO Authenticator is proven at 305, then the method 300 (and system 200) can activate the FIDO authenticator or token at a FIDO server at 306. The method 300 can continue to use an activation service to redirect an identity provider (IDP) to continue authentication of the end user at 307.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to "). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The term "computer network" can many any type of communication network that is wired or wireless and more generically refers to a network in general.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A method (100) of activating an administrator managed Fast Identity Online (FIDO) authenticator, comprising:
provisioning (102) a FIDO authenticator in an enterprise system at an administrator level for use by an end user (105), wherein the enterprise system comprises one or more processors and memory coupled to the one or more processors and wherein an administrator is coupled to the end user via a computer network;
marking (104) the FIDO authenticator as pending activation by the end user (105); and
restricting (106) use of the FIDO authenticator until the end (105) user follows an activation flow that includes confirmation of the end user identity and includes proof of possession of the FIDO authenticator.

2. The method of claim 1, wherein the administrator provisions the FIDO authenticator for the end user by importing a FIDO toke or a user interface.

3. The method of claim 2, wherein the administrator calls an API gateway to import the FIDO token.

4. The method of claim 3, wherein the API gateway calls a FIDO server to import the FIDO token with the pending activation.

5. The method of claim 1, wherein the administrator shares the FIDO authenticator with the end user.

6. The method of claim 1, wherein the system end user activates the FIDO authenticator by confirming the end user's identification by using LDAP password, Email verification, SMS verification, OTP verification, government document verification, or company document verification.

7. The method of claim 1, wherein the system in response to detecting the end user attempting to authenticate the FIDO authenticator and detecting that the FIDO authenticator is in a pending activation state, initiates an activation flow requiring confirmation of an end user identity and confirmation of possession of the FIDO authenticator by requiring use of a FIDO token by the end user.

8. The method of claim 7, wherein the system activates the FIDO token in a FIDO server in response to a successful FIDO authentication of the FIDO authenticator.

9. The method of claim 8, wherein the system uses an activation service to redirect to an identity provider to continue authentication of the end user.

10. A system (100) of activating an administrator managed Fast Identity Online (FIDO) authenticator using an identity provider (208) and activation service (210), comprising:
one or more processors and memory coupled to the one or more processors, wherein the memory includes computer instructions which when executed by the one or more processors causes the one or more processors to perform the operations of:
receiving (222) a request via a communication network to provision a FIDO authenticator in an enterprise system at an administrator level for use by an end user (105);
marking (234) the FIDO authenticator as pending activation by the end user (105); and
restricting (236) use of the FIDO authenticator until the end user (105) follows an activation flow that includes confirmation of the end user identity and includes proof of possession of the FIDO authenticator.

11. The system of claim 10, wherein the administrator provisions the FIDO authenticator for the end user by importing a FIDO token via an application programming interface (API) and wherein the administrator calls an API gateway to import the FIDO token and the API gateway calls a FIDO server to import the FIDO token with the pending activation.

12. The system of claim 10, wherein the system in response to detecting the end user attempting to authenticate the FIDO authenticator and detecting that the FIDO authenticator is in a pending activation state, initiates an activation flow requiring confirmation of an end user identity and confirmation of possession of the FIDO authenticator by requiring use of a FIDO token by the end user,
wherein the administrator shares the FIDO authenticator with the pending activation with the end user,
wherein the end user activates the FIDO authenticator by confirming the end user's identification by using at least a multi-factor verification or authentication process.
wherein the system activates the FIDO token in a FIDO server in response to a successful FIDO authentication of the FIDO authenticator.

13. A system (100) of activating an administrator managed Fast Identity Online (FIDO) authenticator, comprising:
one or more processors and memory coupled to the one or more processors, wherein the memory includes computer instructions which when executed by the one or more processors causes the one or more processors at one or more of an authentication server, an identity provider, a FIDO server, and an activation service associated with an enterprise to perform the operations of:
receiving (222) a request at an administrator level via a communication network at the authentication server to provision a FIDO authenticator for use by an end user having an end user identity;
designating (234) the FIDO authenticator as pending activation until the FIDO activator is activated by the end user; and
authenticating (232) the FIDO authenticator only after an end user activation flow that includes receipt by the authentication server of confirmation of the end user identity and includes receipt by the authentication server of proof of possession of the FIDO authenticator by the end user.

14. The system of claim 13, wherein an administrator provisions the FIDO authenticator for the end user by importing a FIDO token via an application programming interface (API) to the authentication server and wherein the administrator calls an API gateway to import the FIDO token and the API gateway calls a FIDO server to import the FIDO token with the pending activation.

15. The system of claim 13, wherein the end user activates the FIDO authenticator by confirming the end user's identification by using an LDAP password or using Email verification.

16. The system of claim 17, wherein the system in response to detecting the end user attempting to authenticate the FIDO authenticator and detecting that the FIDO authenticator is in a pending activation state, initiates an activation flow requiring confirmation of the end user identity and confirmation of possession of the FIDO authenticator by requiring use of a FIDO token by the end user.
